# EUROPÄISCHE PATENTSCHRIFT

(11) **EP 1 406 464 B1**
(45) Veröffentlichungstag und Bekanntmachung des Hinweises auf die Patenterteilung: **25.05.2005**
(21) Anmeldenummer: 03103530.6
(22) Anmeldetag: 24.09.2003
(51) Int. Cl.: H04Q 7/38, H04L 9/08, H04L 9/32, H04L 29/06

(54) **Verfahren sowie Kommunikationsendgerät zum gesicherten Aufbau einer Kommunikationsverbindung**
Method and communication device for secure set-up of a communication connection
Procédé et terminal de communication pour l'établissement sécurisé d'une connexion de communication

(30) Priorität: 25.09.2002 DE 10244610
(43) Veröffentlichungstag der Anmeldung: 07.04.2004
(73) Patentinhaber: SIEMENS AKTIENGESELLSCHAFT, 80333 München (DE)
(72) Erfinder: Eckert, Michael, 38122, Braunschweig (DE); Hans, Martin, 31139, Hildesheim (DE); Luft, Achim, 38120, Braunschweig (DE)

(56) Entgegenhaltungen:
- EP-A- 0 944 203
- EP-A- 0 948 159
- WO-A-02/37745
- WO-A-98/02991

## Beschreibung

Die Erfindung betrifft ein Verfahren zum gesicherten Aufbau einer Kommunikationsverbindung gemäß dem Oberbegriff des Anspruchs 1 sowie ein Kommunikationsendgerät zum gesicherten Aufbauen einer Kommunikationsverbindung gemäß dem Anspruch 4 bzw. 5.

Es sind Verfahren bekannt, um Daten über Kommunikationsnetze sicher transportieren zu können. Sicher bedeutet hierbei, dass Kommunikationsteilnehmer des Kommunikationsnetzes mit hoher Wahrscheinlichkeit darauf vertrauen können, dass empfangene Daten
1) auf dem Übertragungsweg nicht von jemand unbefugtem gelesen wurden,
2) auf dem Übertragungsweg nicht verändert wurden und
3) von demjenigen empfangen wurden, der die Daten gesendet zu haben vorgibt.

Die Sicherstellung dieser drei Grundprinzipen der sicheren Datenübertragung werden
1) Verschlüsselung ("Ciphering")
2) Integritätsprüfung *("Integrity Check"*) und
3) Authentifizierung ("Authentication") genannt.

Grundsätzlich lassen sich für die Verschlüsselung und Authentifizierung genutzte Verfahren wie folgt in zwei Gruppen unterteilen:

Verfahren, bei denen die Schlüssel für Ver- und Entschlüsselung identisch sind (sog. symmetrische oder "*Secret Key"* Verfahren).

Verfahren, bei denen unterschiedliche Schlüssel für Ver- und Entschlüsselung genutzt werden (sog. asymmetrische oder *"Public Key"* Verfahren, bei denen ein privater Schlüssel, der sogenannte *"Private Key"* und ein öffentlicher Schlüssel *"Public Key",* d.h. ein Schlüsselpaar, je zu sichernder Einheit generiert wird).

Bei symmetrischen Verfahren ist im Allgemeinen der Algorithmus zur Ver- bzw. Entschlüsselung bekannt und für die wirksame Verschlüsselung kommt es auf die Geheimhaltung des Schlüssels an. Bei asymmetrischen Verfahren ist ebenfalls im Allgemeinen der Algorithmus bekannt und für die wirksame Verschlüsselung kommt es auf die Geheimhaltung des Private Key an, während der Public Key allgemein bekannt sein darf.

Haben zwei Kommunikationsendgeräte, die eines der o.g. Verfahren nutzen wollen, und die denselben Algorithmus für dieses Verfahren betreiben, einen geeigneten Schlüssel ausgetauscht, und ist dieser Schlüssel niemandem (keiner unauthorisierten Einheit) bekannt, so gewährleistet der Verschlüsselungsalgorithmus eine ausreichende Verschlüsselung bzw. Authentifizierung oder Integritätsprüfung.

Eine überaus sichere Kommunikation lässt sich in solchen Kommunikationsnetzen gewährleisten, in denen, wie beschrieben, Algorithmen für die Übertragungssicherheit sorgen und in denen den kommunizierenden Einheiten die Schlüssel bereits vor Beginn der Datenkommunikation bekannt sind.

Dagegen stellt in Netzen, in denen die Schlüssel zunächst vor der Datenübertragung ausgehandelt werden müssen, diese Schlüsselaushandlungsphase eine Möglichkeit für unauthorisierte Kommunikationseinheiten dar, die Schlüssel zu erhalten oder zu manipulieren und somit die sichere Datenübertragung zu korrumpieren.

Insbesondere bei solchen Datenübertragungen, bei denen die Kommunikationseinheiten (Kommunikationsendgeräte) zunächst kein Wissen voneinander haben, bei denen sie also auch keine Schlüssel oder gemeinsamen unveröffentlichten geheime Daten haben, müssen am Anfang der Datenübertragung Nachrichten ausgetauscht werden, die weitgehend unverschlüsselt sind und somit einem Angriff durch unauthorisierte Dritte ausgesetzt sein können. Solche Dritte könne dann ggf. die Schlüsselaushandlung abhören und sich so der Schlüssel bemächtigen, oder sie geben sich jeder der Kommunikationseinheiten als die jeweils andere aus (*"Man in the middle"*) und können so die Kommunikation zwischen den beiden Einheiten abhören.

Aus WO 02/37745 A1 ist ein Verfahren bekannt, das die Datenübertragung für eine Anwendung zwischen zwei Endgeräten über zwei separate Datenübertragungsnetze (erstes und zweites Datenübertragungsnetz) ermöglicht, wobei über das erste Datenübertragungsnetz sicherheitsrelevante Daten und über das zweite Datenübertragungsnetz zugehörige Nutzdaten übertragen werden.

Aus WO 98/02991 ist ein Verfahren bekannt, das das Anfordern und Übertragen einer vertraulichen Information, insbesondere eines Schlüssels, von einer zweiten Einheit zu einer ersten Einheit während einer bestehenden Verbindung der ersten Einheit über eine ISDN-Verbindung und das Internet zu der zweiten Einheit ermöglicht.

Die der Erfindung zugrundeliegende Aufgabe ist es, ein Verfahren bzw. ein Kommunikationsendgerät anzugeben, die es erlauben, unberechtigte Zugriffe auf innerhalb eines Kommunikationsnetzes übertragenen Daten weitestgehend auszuschließen.

Diese Aufgabe wird ausgehend von dem Verfahren gemäß dem Oberbegriff des Anspruchs 1 durch dessen kennzeichnenden Merkmale gelöst. Zudem wird die Aufgabe durch ein erstes bzw. zweites Kommunikationsgerät gemäß dem Anspruch 4 bzw. 5 gelöst.

Bei dem erfindungsgemäßen Verfahren zum gesicherten Aufbau einer, insbesondere direkten, gemäß einem ersten Kommunikationsstandard funktionierenden ersten Kommunikationsverbindung zwischen zumindest einem ersten Kommunikationsendgerät und einem zweiten Kommunikationsendgerät, wobei zum Etablieren der ersten Kommunikationsverbindung gemäß dem ersten Kommunikationsstandard zwischen dem ersten Kommunikationsendgerät und dem zweiten Kommunikationsendgerät ein Austausch von Schlüsseln zur Verschlüsselung von über die erste Kommunikationsverbindung übertragenen Daten durchgeführt wird, erfolgt der Schlüsselaustausch zumindest teilweise über eine zweite gemäß einem Funkkommunikationsstandard vermittelte, insbesondere dem UMTS-Standard, funktionierende Kommunikationsverbindung.

Das erfindungsgemäße Verfahren hat zudem den Vorteil, dass sie in allen Kommunikationssystemen, in denen Endgeräte direkt oder zumindest über ein unsicheres Kommunikationsnetz miteinander kommunizieren, beispielsweise Funkgeräte, DECT Geräte, WLAN oder LAN Kommunikation oder auch UMTS Mobilfunkgeräte im sogenannten "Direct Mode", einer Endgerät-zu-Endgerät Kommunikation ohne Mobilfunknetz, die eine mögliche Erweiterung des UMTS Standards für die Zukunft darstellt, Anwendung finden kann, da zumindest Teile der Schlüssel über einen gesicherten Übertragungsweg zu den Kommunikationspartnern gelangen.

Durch das erste Kommunikationsendgerät wird eine zweite Nachricht, die einen ersten Schlüssel enthält, an das zweite Kommunikationsendgerät über die zweite Kommunikationsverbindung übermittelt und durch das zweite Kommunikationsendgerät anschließend eine dritte Nachricht, die einen zweiten Schlüssel enthält, an das erste Kommunikationsendgerät über die erste Kommunikationsverbindung übermittelt. Somit ist zumindest die Übertragung des ersten Schlüssels gesichert und damit zumindest das Manipulieren bzw. Korrumpieren von Daten, die vom zweiten Kommunikationsendgerät zum ersten Kommunikationsendgerät übermittelt werden, weitestgehend ausgeschlossen. Dies berücksichtigt den Effekt, dass im Allgemeinen für einen Missbrauch der übertragenen Daten, beide Übertragungsrichtungen abgehört und vor allem entschlüsselt werden müssen. Ist zumindest eine Übertragungsrichtung vor dem Abfangen des Schlüssels und damit vor dem Abhören gesichert, fällt es einem unberechtigten schwer, den Kontext der ausgetauschten Daten nachzuvollziehen. Ein "Man in the middle" Angriff, ist so nicht möglich.

Der Schlüsselaustausch erfolgt nach Eingehen einer vom zweiten Kommunikationsendgerät gesendeten ersten Nachricht beim ersten Kommunikationsendgerät, wobei hierzu die erste, insbesondere als Anfrage "Request" ausgestaltete, Nachricht eine das zweite Kommunikationsendgerät in einem, nach dem Funkkommunikationsstandard ausgestalteten, Netz eindeutig authentifizierenden Adressinformation enthält. Hiermit ist zum einen klar, dass der Wunsch des Aufbaus einer direkten Kommunikation erfasst und durch das Übertragen der Adressinformation sichergestellt wird, dass nur der hierdurch im gemäß dem Funkkommunikationsstandard ausgestalteten Kommunikationspartner authentifiziert und in der Lage ist, Daten über den zweiten Kommunikationsweg zu erhalten.
In der zweiten Nachricht wird neben dem ersten Schlüssel eine, insbesondere zufallsgenerierte, Bitfolge an das zweite Kommunikationsgerät über die zweite Kommunikationsverbindung übertragen. Dies hat den Vorteil, dass das erste Kommunikationsendgerät durch eine nur ihr bekannte Bitfolge eine Authentifizierungsmöglichkeit schafft. Zum Schutz vor Entzifferung durch unberechtigte Dritte, wird die vom zweiten Endgerät empfange Bitfolge, vorteilhafter Weise mit dem ersten Schlüssel des zweiten Kommunikationsendgerätes verschlüsselt über die erste Kommunikationsverbindung als Teil der dritten Nachricht übertragen, so dass im ersten Kommunikationsendgerät ein Vergleich der Bitfolge der zweiten Nachricht mit der Bitfolge der dritten Nachricht erfolgen kann, dessen Ergebnis Aufschluss über die Authentisierung gibt. Denn bei einer Übereinstimmung der beiden Abfolgen ist klar, dass der Ursprung der dritten Nachricht nur das zweite Kommunikationsendgerät sein kann, so dass letztendlich der gewünschte Datenaustausch zwischen dem ersten Kommunikationsendgerät und zweiten Kommunikationsendgerät auf direktem Weg, d.h. über die erste Kommunikationsverbindung erfolgen kann, wobei hierzu vom ersten Kommunikationsendgerät ausgehenden Daten mit dem zweiten Schlüssel und die vom zweiten Kommunikationsendgerät ausgehenden Daten mit dem ersten Schlüssel verschlüsselt werden, so dass unberechtigtes Auswerten der übertragenen Daten verhindert wird.

Funktioniert das Übermitteln der zweiten und/oder dritten Nachricht gemäß einem Standard für über Funk versendete Kurzmitteilungen, insbesondere nach dem "Short Message Standard", erfolgt die Umsetzung des Verfahrens auf einfache Art unter Ausnutzung vorhandener Ein-Wege Messaging Methoden.

Alternativ lässt sich das Übermitteln der zweiten und/oder dritten Nachricht gemäß einem Standard zum Übertragen von Paketdaten realisieren, so dass das erfindungsgemäße Verfahren beispielsweise in Systemen ohne vergleichbare Ein-Weg Messaging Methoden implementiert werden kann.

Das erste bzw. zweite Kommunikationsendgerät zum gesicherten Aufbau einer, insbesondere direkten, Kommunikationsverbindung, gemäß Anspruch 4 bzw. 5 ermöglicht eine Realisierung des Verfahrens durch Bereitstellung von Mitteln zur Durchführung des Verfahrens.

Weitere Einzelheiten und Vorteile der Erfindung, werden in den Figuren 1 bis 2 erläutert. Davon zeigen
- Figur 1: Darstellung eines Anordnungsszenarios,
- Figur 2: schematische Darstellung des Ablaufs des erfindungsgemäßen Verfahrens bei einem Einsatz in einer Anordnung gemäß dem Szenario.

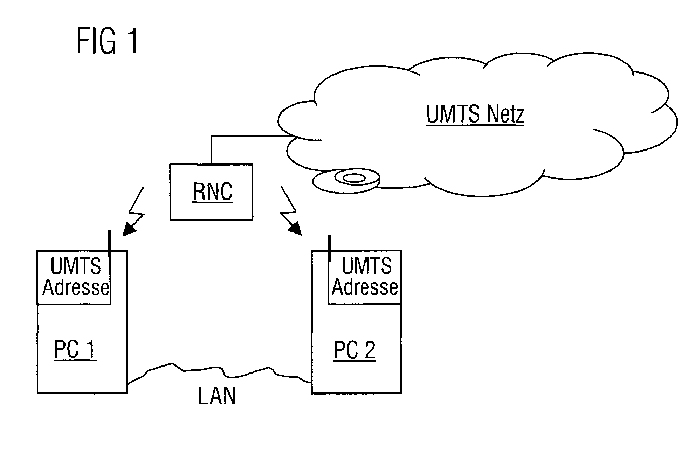

Bei dem in Figur 1 dargestellten Beispiel ist ein erstes Kommunikationsendgerät PC1 und ein zweites Kommunikationsendgerät PC2, die bei diesem Ausführungsbeispiel als Datenverarbeitungsendgerät, beispielsweise Personal Computer (PC) oder Laptop, mit jeweils einer UMTS-PC-Karte UMTS1, UMTS2 ausgestaltet sind.

Mit Hilfe dieser UMTS-PC-Karten UMTS1, UMTS2 sind das erste Kommunikationsendgerät PC1 und das zweite Kommunikationsendgerät PC2 in der Lage, einem durch ein UMTS-Mobilfunknetz UMTS-NETZWERK bereitgestellte Funkversorgungsbereich Daten drahtlos zu übertragen. Das UMTS-Mobilfunknetz UMTS-NETZWERK ist für diese Darstellung vereinfacht durch UMTS-Luftschnittstellen (Pfeile) und einem *Radio Network Controler* (RNC), der die Luftschnittstellen kontrolliert, dargestellt.

Zwischen den beiden Kommunikationsendgeräten PC1, PC2 gemäß dem Ausführungsbeispiel besteht zusätzlich noch eine gemeinsame Anbindung an ein weiteres Kommunikationsnetzwerk LAN. Über dieses, als sogenanntes "Local Area Network" ausgestaltetes, Netzwerk LAN sind das erste Kommunikationsendgerät PC1 und das zweite Kommunikationsendgerät PC2 in der Lage, eine direkte Verbindung zueinander aufzubauen, direkt heißt hierbei, dass ohne Vermittlung einer übergeordneten, bei drahtlosen Netzen mit einer Basisstation vergleichbaren, Instanz eine Kommunikationsverbindung etabliert und hierüber Daten ausgetauscht werden können.

Die Erfindung ist alternativ auch mit mobilen Endgeräten wie UMTS Endgeräten, die zu einer direkten Verbindung in einem sogenannten "Direct Mode" befähigt sind, oder "Digital European Cordless Telefone" DECT Endgeräten in einem vergleichbaren "Direct Mode" realisierbar aber nicht darauf eingeschränkt. Denkbar wäre beispielsweise die Anwendung des Kurzstreckenfunkstandards Bluetooth zur Realisierung einer direkten Verbindung.

Für dieses Ausführungsbeispiel ist, ohne hierauf eingeschränkt zu sein, als Funkkommunikationsnetzwerk das UMTS-Netz gewählt, da es eine gesicherte Kommunikation zwischen zwei Teilnehmern ermöglicht. Vergleichbar sichere Funkkommunikationsnetzwerke wären ebenso vorteilhaft einsetzbar.

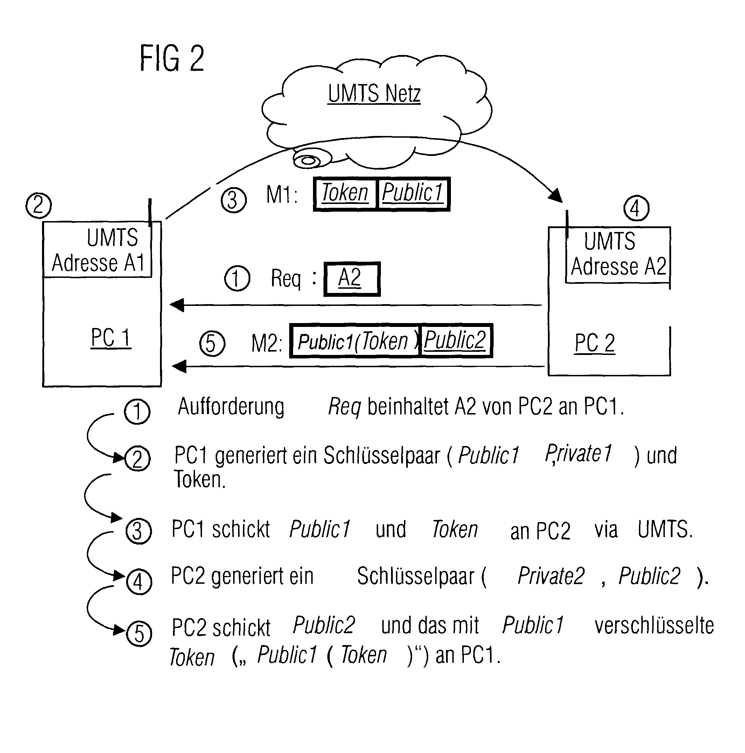

Der erfindungsgemäße Ablauf eines Aufbaus einer gesicherten direkten Verbindung in oben dargestelltem Szenario ist in Figur 2 gezeigt.

Ein wesentliches Merkmal des erfindungsgemäßen Verfahrens ist es, dass die beiden Kommunikationsendgeräte zusätzlich zu der zu etablierenden direkten Kommunikationsmöglichkeit über das lokale Netz LAN, auch über die Möglichkeiten der Kommunikation über ein gesichertes Funkkommunikationsnetz, wie das UMTS-Mobilfunknetz UMTS-NETZWERK verfügen, wobei den Engeräten vorteilhafter Weise innerhalb des betreffenden Funkkommunikationsnetzwerks UMTS-NETZWERK jeweils eine eineindeutige Adresse zugeordnet sein muss.

Das Verfahren kommt dann zu tragen, wenn beispielsweise das zweite Kommunikationsendgerät PC2 feststellt, dass es eine gesicherte Kommunikationsstrecke mit dem ersten Kommunikationsendgerät PC1 aufbauen möchte.

Ein mögliches Szenario ist beispielsweise, dass es sich bei dem ersten Kommunikationsendgerät PC1 um einen Server im Internet handelt, der beispielsweise den Internet-Vertrieb einer Firma unterstützt.

Das zweite Kommunikationsendgerät PC2 sei dann beispielsweise der Personal Computer eines Nutzers, der Produkte dieser Firma über das Internet erwerben möchte. Dazu schaut der Nutzer auf der Homepage der Firma nach und sieht dort die Telefonnummer A1 (MS-ISDN) des Servers, die für elektronische Schlüsselaushandlungen genutzt werden soll (bspw. +491755815000).

Diese Telefonnummer kann er entweder per Hand oder automatisch in ein entsprechendes Programm seines Endgerätes PC2 eingeben, welches die erfindungsgemäße verschlüsselte Kommunikation leisten soll.

Das erfindungsgemäße Verfahren beginnt nun mit einem ersten Schritt 1, bei dem das zweite Kommunikationsendgerät PC2 eine Aufforderungsnachricht REQ zusammenstellt, die die Telefonnummer A2 vom zweiten Endgerät PC2 im UMTS-Netz (MS-ISDN, bspw. +491755815099) und die Anforderung eines Schlüssels enthält, und sendet diese über das Internet LAN an das erste Kommunikationsendgerät PC1.

In einem zweiten Schritt 2 empfängt das erste Kommunikationsendgerät PC1 diese Nachricht, generiert ein Schlüsselpaar, bestehend aus einem privaten 128 Bit langen ersten Schlüssel PRIVAT1 und einem öffentlichen 128 Bit langen zweiten Schlüssel PUBLIC1. Des Weiteren generiert das erste Endgerät eine 32 Bit lange zufällige Bitfolge TOKEN.

Die Zufallsfolge TOKEN und sowie der zweite Schlüssel PUBLIC1 werden in einem dritten Schritt 3 in eine erste Nachricht M1, die nach dem aus dem "Global Sytem Mobile" GSM und UMTS Standard bekannten "Short Message Service(SMS)" ausgestaltet ist, über das UMTS Mobilfunknetz UMTS-NETZ an das zweite Kommunikationsendgerät PC2 gesendet.

In einem vierten Schritt 4 empfängt das zweite Kommunikationsendgerät PC2 diese SMS und vergleicht die Absender-Rufnummer A1 mit der Rufnummer aus dem Internet (hier +491755815000). Stimmen diese überein, ist vorteilhafterweise der Absender der SMS authentifiziert, so dass in diesem vierten Schritt 4 das zweite Kommunikationsendgerät PC2 seinerseits ein Schlüsselpaar mit einem privaten 128 Bit langen dritten Schlüssel PRIVATE2 und einem öffentlichen 128 Bit langen vierten Schlüssel PUBLIC2 generiert und eine zweite Nachricht M1 zusammenstellt.

In einem fünften Schritt 5 wird die zweite Nachricht M1, in der der vierte Schlüssel PUBLIC2 gemeinsam mit der zuvor erhaltenen Zufallsfolge TOKEN, welche zuvor mit dem zweiten Schlüssel, das mit PUBLIC1 verschlüsselt wurde, enthalten ist, über die durch das Internet zur Verfügung gestellte direkte Verbindungsmöglichkeit an das erste Endgerät PC1 übertragen.

Nach Empfang dieser zweiten Nachricht M2 kann das erste Kommunikationsendgerät PC1 die darin enthaltene Zufallsfolge TOKEN mit Hilfe vom ersten Schlüssel PRIVATE 1 entschlüsselt werden, um durch einen Vergleich mit der zuvor übermittelten Zufallsfolge TOKEN den Absender der zweiten Nachricht M2 zu authentifizieren.

Stimmen diese Folgen überein, kann die angestrebte direkte Verbindung zwischen dem ersten Kommunikationsendgerät PC1 und dem zweiten Kommunikationsendgerät PC2 gesichert durchgeführt werden, da nach Abschluss des erfindungsgemäßen Verfahrens, neben der Authentisierung der Quelle PC1, PC2 auch die ausgehandelten Schlüssel PUBLIC1, PUBLIC2 für eine Verschlüsselung der direkten Kommunikation zwischen dem ersten Endgerät PC1 und dem zweiten Endgerät PC2 beim jeweiligen Kommunikationspartner zur Verfügung stehen.

Die Erfindung soll nicht auf das beschriebene Ausführungsbeispiel beschränkt sein. Vielmehr umfasst sie auch die Anwendung in allen Kommunikationssystemen, in denen Endgeräte direkt oder zumindest über ein unsicheres Kommunikationsnetz miteinander kommunizieren, wie beispielsweise Funkgeräte, DECT Geräte, zur WLAN-Kommunikation ausgestaltete Geräte oder auch UMTS Mobilfunkgeräte im sogenannten "Direct Mode", einer Endgerät-zu-Endgerät Kommunikation ohne Mobilfunknetz, die eine mögliche Erweiterung des UMTS Standards für die Zukunft darstellt, sofern der erfindungswesentliche Kern (zumindest teilweiser Schlüsselaustausch für eine Kommunikation über ei ne Kommunikationsverbindung, die gemäß einem gesicherten Funkkommunikationsstandard funktioniert, implementiert ist.

## Patentansprüche

1. Verfahren zum gesicherten Aufbau einer, insbesondere direkten, gemäß einem ersten Kommunikationsstandard funktionierenden, ersten Kommunikationsverbindung zwischen zumindest einem ersten Kommunikationsendgerät (PC1) und einem zweiten Kommunikationsendgerät (PC2), wobei zum Etablieren der ersten Kommunikationsverbindung gemäß dem ersten Kommunikationsstandard zwischen dem ersten Kommunikationsendgerät (PC1) und dem zweiten Kommunikationsendgerät (PC2) ein Austausch von Schlüsseln zur Verschlüsselung von über die erste Kommunikationsverbindung übertragenen Daten durchgeführt wird, wobei der Schlüsselaustausch zumindest teilweise über eine zweite gemäß einem Funkkommunikationsstandard vermittelte, insbesondere dem UMTS-Standard, funktionierende Kommunikationsverbindung erfolgt, wobei das erste Kommunikationsendgerät (PC1) eine zweite Nachricht (M1), die einen ersten Schlüssel (Publicl) enthält, an das zweite Kommunikationsendgerät (PC2) über die zweite Kommunikationsverbindung übermittelt und das zweite Kommunikationsendgerät (PC2) anschließend eine dritte Nachricht (M2), die einen zweiten Schlüssel (Public2) enthält, an das erste Kommunikationsendgerät (PC1) über die erste Kommunikationsverbindung übermittelt,
**dadurch gekennzeichnet, dass**
a) der Schlüsselaustausch nach Eingehen einer vom zweiten Kommunikationsendgerät (PC2) gesendeten ersten Nachricht (Req) beim ersten Kommunikationsendgerät (PC1) erfolgt, wobei hierzu die erste, insbesondere als Anfrage "Request" ausgestaltete, Nachricht (Req) eine das zweite Kommunikationsendgerät (PC2) in einem, nach dem Funkkommunikationsstandard ausgestalteten, Netz eindeutig authentifizierenden Adressinformation (A2) enthält,
b) mit der zweiten Nachricht (M1) neben dem ersten Schlüssel (Public1) eine, insbesondere zufallsgenerierte, Bitfolge (Token) an das zweite Kommunikationsgerät (PC2) über die zweite Kommunikationsverbindung übertragen wird,
c) die Bitfolge (Token), mit dem ersten Schlüssel (Public1) des zweiten Kommunikationsendgerätes (PC2) verschlüsselt und über die erste Kommunikationsverbindung als Teil der dritten Nachricht (M2) übertragen wird,
d) im ersten Kommunikationsendgerät (PC1) ein Vergleich der Bitfolge (Token) der zweiten Nachricht (M1) mit der Bitfolge (Token) der empfangenen dritten Nachricht (M2) erfolgt,
e) bei einer Übereinstimmung ein Datenaustausch zwischen dem ersten Kommunikationsendgerät (PC1) und zweiten Kommunikationsendgerät (PC2) über die erste Kommunikationsverbindung stattfindet, wobei hierzu vom ersten Kommunikationsendgerät (PC1) ausgehenden Daten mit dem zweiten Schlüssel (Public2) und die vom zweiten Kommunikationsendgerät (PC2) ausgehenden Daten mit dem ersten Schlüssel (Publicl) verschlüsselt werden.

2. Verfahren nach Anspruch 1,
**dadurch gekennzeichnet, dass**
das Übermitteln der zweiten und/oder dritten Nachricht (M1, M2) gemäß einem Standard für über Funk versendete Kurzmitteilungen, insbesondere nach dem "Short Message Standard", funktioniert.

3. Verfahren nach einem der Ansprüche 1 oder 2,
**dadurch gekennzeichnet, dass**
das Übermitteln der zweiten und/oder dritten Nachricht (M1, M2) gemäß einem Standard zum Übertragen von Paketdaten funktioniert.

4. Erstes Kommunikationsendgerät (PC1) zum gesicherten Aufbau einer, insbesondere direkten, Kommunikationsverbindung, nach einem der vorhergehenden Ansprüche,
**gekennzeichnet durch**
Mittel zur Durchführung des Verfahrens.

5. Zweites Kommunikationsendgerät (PC2) zum gesicherten Aufbau einer, insbesondere direkten, Kommunikationsverbindung, nach einem der Ansprüche 1 bis 3,
**gekennzeichnet durch**
Mittel zur Durchführung des Verfahrens.

## Claims

1. Method for secure establishment of a, in particular direct, first communication connection operating according to a first communication standard between at least a first communication terminal device (PC1) and a second communication terminal device (PC2), whereby for establishment of the first communication connection according to the first communication standard between the first communication terminal device (PC1) and the second communication terminal device (PC2) an exchange of keys for encrypting data transferred over the first communication connection is carried out, whereby the key exchange is performed at least partially via a second switched communication connection operating according to a radio communication standard, in particular the UMTS standard, whereby the first communication terminal device (PC1) transmits a second message (M1) containing a first key (Public1) to the second communication terminal device (PC2) via the second communication connection and the second communication terminal device (PC2) subsequently transmits a third message (M2) containing a second key (Public2) to the first communication terminal device (PC1) via the first communication connection,
**characterised in that**
a) the key exchange is performed following reception of a first message (Req) sent by the second communication terminal device (PC2) at the first communication terminal device (PC1), whereby for this purpose the first message (Req), in particular structured in the form of a "request", contains address information (A2) uniquely authenticating the second communication terminal device (PC2) in a network configured according to the radio communication standard,
b) with the second message (M1), in addition to the first key (Public1) a, in particular randomly generated, bit sequence (Token) is transmitted to the second communication device (PC2) via the second communication connection,
c) the bit sequence (Token) is encrypted with the first key (Public1) of the second communication terminal device (PC2) and transmitted via the first communication connection as part of the third message (M2),
d) the bit sequence (Token) of the second message (M1) is compared with the bit sequence (Token) of the received third message (M2) in the first communication terminal device (PC1),
e) in the case of a match a data exchange takes place between the first communication terminal device (PC1) and the second communication terminal device (PC2) via the first communication connection, whereby for this purpose data originating from the first communication terminal device (PC1) is encrypted with the second key (Public2) and the data originating from the second communication terminal device (PC2) is encrypted with the first key (Public1).

2. Method according to Claim 1,
**characterised in that**
the transmission of the second and/or third message (M1, M2) operates according to a standard for short messages transmitted via radio, in particular according to the "Short Message Standard".

3. Method according to one of Claims 1 or 2,
**characterised in that**
the transmission of the second and/or third message (M1, M2) operates according to a standard for transmitting packet data.

4. First communication terminal device (PC1) for secure establishment of a, in particular direct, communication connection, according to one of the preceding claims,
**characterised by**
means for performing the method.

5. Second communication terminal device (PC2) for secure establishment of a, in particular direct, communication connection, according to one of Claims 1 to 3,
**characterised by**
means for performing the method.
means for performing the method.

## Revendications

1. Procédé pour l'établissement sécurisé d'une première connexion de communication, en particulier directe, fonctionnant selon un premier standard de communication, entre au moins un premier terminal de communication (PC1) et un deuxième terminal de communication (PC2), un échange de clés pour le chiffrement de données transmises par l'intermédiaire de la première connexion de communication étant effectué aux fins de l'établissement de la première connexion de communication selon le premier standard de communication entre le premier terminal de communication (PC1) et le deuxième terminal de communication (PC2), l'échange de clés se faisant du moins en partie par l'intermédiaire d'une deuxième connexion de communication fonctionnant, commutée selon un standard de radiocommunication, en particulier le standard UMTS, le premier terminal de communication (PC1) transmettant un deuxième message (M1) qui contient une première clé (Public1) au deuxième terminal de communication (PC2) par l'intermédiaire de la deuxième connexion de communication et le deuxième terminal de communication (PC2) transmettant ensuite un troisième message (M2) qui contient une deuxième clé (Public2) au premier terminal de communication (PC1) par l'intermédiaire de la première connexion de communication, **caractérisé en ce que**
a) l'échange de clés se fait après qu'un premier message (Req) émis par le deuxième terminal de communication (PC2) est entré dans le premier terminal de communication (PC1), le premier message (Req), plus particulièrement configuré en tant que requête «Request», contenant à cet effet une information d'adresse (A2) qui authentifie univoquement le deuxième terminal de communication (PC2) dans un réseau configuré selon le standard de radiocommunication,
b) avec le deuxième message (M1), outre la première clé (Public1), une suite de bits (Token), en particulier générée aléatoirement, est transmise au deuxième appareil de communication (PC2) par l'intermédiaire de la deuxième connexion de communication,
c) la suite de bits (Token) est chiffrée avec la première clé (Public1) du deuxième terminal de communication (PC2) et est transmise par l'intermédiaire de la première connexion de communication en tant que partie du troisième message (M2),
d) dans le terminal de communication (PC1), une comparaison entre la suite de bits (Token) du deuxième message (M1) et la suite de bits (Token) du troisième message reçu (M2) est opérée,
e) s'il y a coïncidence, un échange de données a lieu entre le premier terminal de communication (PC1) et le deuxième terminal de communication (PC2) par l'intermédiaire de la première connexion de communication, des données sortant du premier terminal de communication (PC1) étant, à cet effet, chiffrées avec la deuxième clé (Public2) et les données sortant du deuxième terminal de communication (PC2), avec la première clé (Public1).

2. Procédé selon la revendication 1,
**caractérisé en ce que**
la transmission du deuxième et/ou du troisième message (M1, M2) fonctionne selon un standard pour des messages courts émis par radio, en particulier selon le «Short Message Standard».

3. Procédé selon l'une des revendications 1 ou 2,
**caractérisé en ce que**
la transmission du deuxième et/ou du troisième message (M1, M2) fonctionne selon un standard pour la transmission de données en paquets.

4. Premier terminal de communication (PC1) pour l'établissement sécurisé d'une connexion de communication, en particulier directe, selon l'une des revendications précédentes,
**caractérisé par**
des moyens permettant d'exécuter le procédé.

5. Deuxième terminal de communication (PC2) pour l'établissement sécurisé d'une connexion de communication, en particulier directe, selon l'une des revendications 1 à 3,
**caractérisé par**
des moyens permettant d'exécuter le procédé.
